(19) Europäisches Patentamt
European Patent Office
Office européen des brevets

(11) **EP 2 399 218 B1**

(12) # EUROPÄISCHE PATENTSCHRIFT

(45) Veröffentlichungstag und Bekanntmachung des Hinweises auf die Patenterteilung:
**27.02.2019** **Patentblatt 2019/09**

(21) Anmeldenummer: **10724081.4**

(22) Anmeldetag: **10.06.2010**

(51) Int Cl.:
*G06F 21/31* (2013.01)     *H04L 9/08* (2006.01)
*G06F 21/34* (2013.01)     *H04L 29/06* (2006.01)
*G06F 21/44* (2013.01)     *H04L 9/30* (2006.01)

(86) Internationale Anmeldenummer:
**PCT/EP2010/058181**

(87) Internationale Veröffentlichungsnummer:
**WO 2011/000681 (06.01.2011 Gazette 2011/01)**

(54) **VERFAHREN ZUR ERZEUGUNG EINES IDENTIFIKATORS**

METHOD FOR GENERATING AN IDENTIFIER

PROCÉDÉ POUR GÉNÉRER UN IDENTIFIANT

(84) Benannte Vertragsstaaten:
**AL AT BE BG CH CY CZ DK EE ES FI FR GB GR HR HU IE IS IT LI LT LU LV MC MK MT NL NO PL PT RO SE SI SK SM TR**

(30) Priorität: **29.06.2009   DE 102009027268**

(43) Veröffentlichungstag der Anmeldung:
**28.12.2011   Patentblatt 2011/52**

(73) Patentinhaber: **Bundesdruckerei GmbH**
**10958 Berlin (DE)**

(72) Erfinder: **SCHWARZ, Carsten**
**13465 Berlin (DE)**

(74) Vertreter: **Richardt Patentanwälte PartG mbB**
**Wilhelmstraße 7**
**65185 Wiesbaden (DE)**

(56) Entgegenhaltungen:
- **"Advanced Security Mechanisms for Machine Readable Travel Documents Extended Access Control (EAC), Password Authenticated Connection Establishment (PACE), and Restricted Identification (RI)" ADVANCED SECURITY MECHANISMS FOR MACHINE READABLE TRAVEL DOCUMENTS, BUNDESAMT FÜR SICHERHEIT IN DER INFORMATIONSTECHNIK, DE, Nr. Version 2.0, 27. Oktober 2008 (2008-10-27), Seiten 1-99, XP007914803**
- **"Technische Richtlinie TR-03127 Architektur Elektronischer Personalausweis" TECHNISCHE RICHTLINIE TR-03127, BUNDESAMT FÜR SICHERHEIT IN DER INFORMATIONSTECHNIK, DE, Nr. Version 0.5, 17. April 2009 (2009-04-17), Seiten 1-37, XP007914804**
- **"Chapter 13: Key Management Techniques ED - MENEZES A; OORSCHOT VAN P; VANSTONE S" [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , XP001525013 ISBN: 978-0-8493-8523-0 Gefunden im Internet: URL:http://www.cacr.math.uwaterloo.ca/hac/ > Absatz [13.6.3]**

EP 2 399 218 B1

**Beschreibung**

Die Erfindung betrifft ein Verfahren zur Erzeugung eines Identifikators, ein Verfahren zur Sperrung einer kryptografischen Vorrichtung, ein Computerprogrammprodukt, ein Sperrsystem und ein Computersystem.

Aus dem Stand der Technik ist die Nutzung von verschiedenen Onlinediensten zum Beispiel für das Onlineshopping oder für e-government Anwendungen an sich bekannt. Typischerweise muss sich ein Nutzer gegenüber dem Computersystem, welches den Onlinedienst erbringt, zum Beispiel über das Internet mit Hilfe eines Authentifizierungs-Tokens identifizieren. Bei dem Authentifizierungs-Token kann es sich zum Beispiel um eine Chipkarte oder einen USB-Stick handeln. Wenn der Authentifizierungs-Token verloren geht, so muss der Nutzer dies gegenüber dem betreffenden Computersystem anzeigen, damit der Authentifizierungs-Token für die unberechtigte Nutzung durch Dritte gesperrt wird. Aus US2004/0123098 A1 ist ein System bekannt, welches es einer dritten Partei ermöglicht, die Existenz einer Beziehung zwischen einer ersten und einer zweiten Partei zu verifizieren. Die erste Partei verfügt über einen ersten und einen zweiten kryptographischen Schlüssel, die zweite Partei über einen dritten und einen vierten kryptographischen Schlüssel, Um die Verifikation der Beziehung zu ermöglichen, generiert die zweite Partei eine Zahl, welche zusammen mit einem zweiten, dritten und vierten kryptographischen Schlüssel einen ersten, einen zweiten und einen dritten kryptographischen Parameter definiert. Vermittels dieser Parameter und eines zweiten und dritten kryptographischen Schlüssels kann die dritte Partei eine Beziehung zwischen der ersten und der zweiten Partei verifizieren.

DE 10342710 A1 beschreibt eine Vorrichtung und ein Verfahren zum Schützen von elektronischen Transaktionen, die mittels eines Transaktions-Identifikationsmittels durchgeführt werden. Mindestens ein RFID-Tag, das nur lesbar ist, und ein weiteres Sicherheitsmerkmal des Transaktions-Identifikationsmittels (z.B. eine Nummer, ein Gültigkeitsdatum des Identifikationsmittels, ein Hologramm, ein Magnetstreifen etc.) werden ausgewertet.

Das Dokument "Advanced Security Mechanisms for Machine Readable Travel Documents - Extended Access Control (EAC), Password Authenticated Connection Establishment (PACE), and Restricted Identification (RI)", BUNDESAMT FÜR SICHERHEIT IN DER INFORMATIONSTECHNIK, Version 2.0, beschreibt drei Sicherheitsmechanismen für maschinenlesbare Reisedokumente: Erweiterte Zugangskontrolle, Passwort authentisierter Verbindungsaufbau sowie Restricted Identification als ein kryptographisches Verfahren zur Erzeugung von sektorspezifischen Kennungen.

Der Erfindung liegt dem gegenüber die Aufgabe zugrunde, ein Verfahren zur Erzeugung eines Identifikators, ein Verfahren zur Sperrung einer kryptografischen Vorrichtung, ein Computerprogrammprodukt, ein Sperrsystem und ein Computersystem zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Verfahren zur Erzeugung eines Identifikators zur Identifizierung eines Paars geschaffen, wobei das Paar eine kryptografische Vorrichtung und ein Computersystem beinhaltet, wobei die kryptografische Vorrichtung einen ersten geheimen Schlüssel aufweist, wobei dem Computersystem ein zweiter geheimer Schlüssel zugeordnet ist, wobei ein Sperrsystem zum Zugriff auf den zweiten geheimen Schlüssel des Computersystems ausgebildet ist, wobei das Sperrsystem einen dritten geheimen Schlüssel aufweist, und wobei zur Erzeugung des Identifikators die folgenden Schritte durchgeführt werden: Erzeugung eines zweiten öffentlichen Schlüssels aus dem zweiten geheimen Schlüssel und einem dem dritten geheimen Schlüssel zugeordneten dritten öffentlichen Schlüssel durch das Sperrsystem, Übertragung des zweiten öffentlichen Schlüssels an das Computersystem, und Erzeugung des Identifikators durch die kryptografische Vorrichtung aus dem ersten geheimen Schlüssel und dem zweiten öffentlichen Schlüssel.

Ausführungsformen der Erfindung ermöglichen eine "2-Wege-Berechnung" des Identifikators. Der Identifikator kann auf zwei verschiedene Arten errechnet werden: Im Rahmen der Nutzung durch Kommunikation zwischen Objekt, d.h. der kryptographischen Vorrichtung, und dem Computersystem, und im Rahmen der Sperrung durch ein Sperrsystem und das Computersystem.

Nach Ausführungsformen der Erfindung erfolgt im Rahmen der Nutzung eine Abfrage einer (für das jeweilige Computersystem individuelle) Liste der gesperrten Objekte. Diese Liste wird fortlaufend mit neu gesperrten Objekten ergänzt.

Nach Ausführungsformen der Erfindung wird für die Nutzung eines Objekts wie folgt vorgegangen: 1) Errechnung des Identifikators. 2) Suchen in der Liste gesperrter Dokumente. 3) Ermöglichung der Nutzung, falls das Objekt nicht gesperrt ist, sonst Abweisung.

Bei der kryptografischen Vorrichtung kann es sich um ein Dokument, insbesondere ein Wert- oder Sicherheitsdokument handeln. Insbesondere kann es sich bei der kryptografischen Vorrichtung um einen elektronischen Reisepass, einen elektronischen Personalausweis oder ein anderes elektronisches Ausweisdokument handeln. Beispielsweise kann die kryptografische Vorrichtung als Chipkarte, als USB-Token oder als eine andere tragbare Vorrichtung, oder als ein sogenanntes Security Modul ausgebildet sein.

Unter einem "Dokument" werden erfindungsgemäß also insbesondere papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher und ein Prozessor integriert ist.

Vorzugsweise hat die kryptografische Vorrichtung einen geschützten Speicherbereich, in dem der erste geheime Schlüssel gespeichert ist. Durch den ersten geheimen Schlüssel und den ersten öffentlichen Schlüssel wird ein erstes asymmetrisches kryptografisches Schlüsselpaar gebildet, wobei der erste öffentliche Schlüssel ebenfalls in der kryptografischen Vorrichtung gespeichert sein kann und/oder in einem öffentlich zugänglichen Verzeichnis, wie zum Beispiel in der Datenbank eines sogenannten Verzeichnisservers.

Insbesondere können dem ersten öffentlichen Schlüssel Identifikationsdaten zugeordnet werden, wobei die Identifikationsdaten zusammen mit dem öffentlichen Schlüssel in der Datenbank abgespeichert werden, sodass mit Hilfe der Identifikationsdaten der erste öffentliche Schlüssel aus der Datenbank von einem Dritten, insbesondere dem Sperrsystem, ausgelesen werden kann. Die Identifikationsdaten können auch in einem Zertifikat beinhaltet sein, welches dem ersten asymmetrischen kryptografischen Schlüsselpaar zugeordnet sein kann. Bei den Identifikationsdaten, die als Datenbank-Zugriffsschlüssel auf den ersten öffentlichen Schlüssel dienen, kann es sich zum Beispiel um den Namen und das Geburtsdatum oder die E-Mail-Adresse des Trägers der kryptografischen Vorrichtung handeln.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie z.B. einer Person, einer Organisation oder einem Computersystem, zuzuordnen. Beispielsweise kann das Zertifikat dem Standard X.509 oder einem anderen Standard entsprechen.

Nach Ausführungsformen der Erfindung erfolgt die Kommunikation zwischen dem Computersystem und der kryptografischen Vorrichtung, insbesondere zur Inanspruchnahme eines von dem Computersystem zur Verfügung gestellten Online-Dienstes, über ein öffentliches Netzwerk, wobei hierzu beispielsweise ein Nutzer-Computersystem, insbesondere ein üblicher Personalcomputer (PC) mit einer Netzwerk-Schnittstelle und einem Lesegerät verwendet werden kann. Über das Lesegerät, wie zum Beispiel ein Chipkarten- oder ein RFID-Lesegerät, ist die kryptografische Vorrichtung mit dem Nutzer-Computersystem gekoppelt, welches seinerseits über eine Netzwerk-Schnittstelle zum Aufbau einer Kommunikationsverbindung, insbesondere einer sogenannten Session, mit dem Computersystem ausgebildet ist.

Statt eines Nutzer-Computersystems kann auch ein Mobilfunkgerät, insbesondere ein sogenanntes Handy, verwendet werden. Als kryptografische Vorrichtung kann in diesem Fall die sogenannten SIM (Subscriber Idendity Module)-Karte, die nach dem GSM, dem UMTS oder einem anderen Telekommunikationsstandard ausgebildet sein kann, verwendet werden. Das Mobilfunkgerät kann aber auch eine Schnittstelle für eine Nahfeldkommunikation, insbesondere nach einem Near Field Communication (NFC)-Standard, aufweisen, um auf die kryptografische Vorrichtung zuzugreifen.

Nach einer Ausführungsform der Erfindung wird von dem Computersystem an die kryptografische Vorrichtung vor der Erbringung einer Online-Dienstleistung der zweite öffentliche Schlüssel übertragen. Die kryptografische Vorrichtung erzeugt aus dem zweiten öffentlichen Schlüssel und dem ersten geheimen Schlüssel dann den Identifikator, welcher dann von der kryptografische Vorrichtung an das Computersystem übertragen wird. Durch den Identifikator wird nicht die kryptografische Vorrichtung selbst, sondern nur das durch die kryptografische Vorrichtung und das Computersystem gebildete Paar eindeutig identifiziert. Dies hat insbesondere den Vorteil, dass die kryptografische Vorrichtung bzw. deren Träger gegenüber dem Computersystem anonym bleiben kann.

Nach einer Ausführungsform der Erfindung hat das Sperrsystem ein erstes Teilsystem und zumindest ein zweites Teilsystem. Nur das erste Teilsystem hat dabei Zugriff auf den dritten geheimen Schlüssel und nur das zweite Teilsystem hat Zugriff auf den zweiten geheimen Schlüssel. Zur Sperrung des Identifikators sind aber sowohl der dritte geheime als auch der zweite geheime Schlüssel erforderlich, sodass nur mit Hilfe sowohl des ersten als auch des zweiten Teilsystems die Sperrung erfolgen kann, nicht aber mit einem der Teilsysteme alleine. Auf diese Art und Weise ist es möglich, ein "4-Augen-Prinzip" für die Durchführung einer Sperrung zu realisieren.

Nach einer Ausführungsform der Erfindung kann die kryptografische Vorrichtung für eine Menge von Computersystemen eingesetzt werden, wobei jedes mögliche Paar der kryptografischen Vorrichtung und eines dieser Computersysteme durch je einen Identifikator eindeutig identifiziert ist. Es können eine Vielzahl weiterer kryptografischer Vorrichtungen verschiedener Nutzer vorhanden sein, für die in analoger Art und Weise ebenfalls Identifikatoren für sämtliche solcher Paare definiert sind.

Wenn eine der kryptografischen Vorrichtungen verloren geht, so muss diese für die weitere Verwendung mit sämtlichen der Computersysteme gesperrt werden. Hierzu wird ein Sperrkommando an das erste Teilsystem des Sperrsystems gerichtet. Das Sperrkommando beinhaltet die Identifikationsdaten, sodass das erste Teilsystem auf die Datenbank zugreifen kann, um den ersten öffentlichen Schlüssel der zu sperrenden kryptografischen Vorrichtung auszulesen. Alternativ beinhaltet das Sperrkommando bereits den ersten öffentlichen Schlüssel, sodass sich ein solcher Zugriff auf die Datenbank erübrigt.

Das Sperrkommando kann zum Beispiel durch einen Anruf eines Nutzers an das Sperrsystem durch Sprachkommunikation initiiert werden oder durch elektronische Kommunikation, wie zum Beispiel durch eine E-Mail, die die Identifikationsdaten beinhaltet, oder die Eingabe des Sperrkommandos und/oder der Identifikationsdaten in eine Internetseite des Sperrsystems.

Das Sperrsystem erzeugt dann sämtliche der Identifikatoren für sämtliche Paare, die aus der Sperrvorrichtung und den Computersystemen gebildet werden können, und überträgt diese Identifikatoren an die betreffenden Computersysteme, sodass sie dort jeweils lokal in Sperrlisten gespeichert werden. Bei einem nachfolgenden Versuch, die kryptografische Vorrichtung für eines dieser Computersysteme zu verwenden, wird durch das betreffende Computersystem festgestellt, dass der von dem kryptografischen Vorrichtung empfangene Identifikator identisch zu einem auf der Sperrliste vorkommenden Identifikator ist, sodass das Computersystem die Erbringung des gewünschten Online-Dienstes ablehnt.

Dies hat den besonderen Vorteil, dass die Sperrung der kryptografischen Vorrichtung durch ein einzelnes Sperrkommando für sämtliche der betroffenen Computersysteme ermöglicht wird. Der Nutzer muss also nicht jedes einzelne der Computersysteme kontaktieren, um dort jeweils die Sperrung zu veranlassen.

Ausführungsformen der Erfindung sind besonders vorteilhaft, um kryptografische Vorrichtungen, beispielsweise ID-Dokumente, insbesondere solche, die keinen eindeutigen Identifier haben, verteilt zu sperren. Ein Beispielsszenario ist ein ID-Dokument, das für verschiedene Computersysteme verschiedener Anbieter von Online-Diensten oder Online-Produkten verwendet werden kann.

Beispielsweise kann dasselbe ID-Dokument zur Authentifizierung gegenüber einer Internet-Auktionsplattform, wie zum Beispiel Ebay, und zur Identifizierung gegenüber einem Online-Shop, wie zum Beispiel Amazon, verwendet werden. Aus dem ersten geheimen Schlüssel des ID-Dokuments, wie zum Beispiel einer Kundentreuekarte, wird in Kombination mit dem zweiten öffentlichen Schlüssel, der Ebay zugeordnet ist, ein Identifikator errechnet, der für die Kombination Kundentreuekarte-Ebay eindeutig ist. Der Anbieter Ebay verfügt dann über einen Identifikator für das Paar Kundentreuekarte-Ebay, ohne weitere Angaben aus der Kundentreuekarte zu benötigen.

Entsprechendes gilt für Amazon, wobei der für das Paar Kundentreuekarte-Amazon errechnete Identifikator von dem Identifikator des Paars Kundentreuekarte-Ebay verschieden ist. Hierdurch wird verhindert, dass die verschiedenen Anbieter, wie zum Beispiel Ebay und Amazon, ihre Datensätze bezüglich des Kundenverhaltens zusammenfügen, da sie aus den Identifikatoren nicht feststellen können, ob sie jeweils mit derselben oder verschiedenen Personen kommunizieren.

In einem weiteren Aspekt betrifft die Erfindung ein Verfahren zur Sperrung einer kryptografischen Vorrichtung, wobei dem Paar bestehend aus der kryptografischen Vorrichtung und einem Computersystem ein Identifikator nach einem Verfahren nach einem der vorhergehenden Ansprüche zugeordnet ist, durch welchen das Paar identifizierbar ist, mit folgenden Schritten: Berechnung des Identifikators durch die Sperrvorrichtung aus dem ersten öffentlichen Schlüssel, dem zweiten geheimen Schlüssel und dem dritten geheimen Schlüssel, Übertragung des Identifikators zu dem Computersystem, und Speicherung des Identifikators in einer Sperrliste des Computersystems.

In einem weiteren Aspekt betrifft die Erfindung ein Computerprogrammprodukt zur Ausführung einer Ausführungsform eines erfindungsgemäßen Verfahrens zur Erzeugung eines Identifikators und/oder eines erfindungsgemäßen Verfahrens zur Sperrung einer kryptografischen Vorrichtung.

In einem weiteren Aspekt betrifft die Erfindung ein Sperrsystem zur Sperrung der Verwendung einer kryptografischen Vorrichtung mit Bezug auf eine Menge von Computersystemen, wobei die kryptografische Vorrichtung einen ersten geheimen Schlüssel aufweist, wobei jedem der Computersysteme je ein zweiter geheimer Schlüssel zugeordnet ist, mit: Mitteln zur Erzeugung eines zweiten öffentlichen Schlüssels für jeden der zweiten geheimen Schlüssel aus dem betreffenden zweiten geheimen Schlüssel und einem dritten öffentlichen Schlüssel, wobei der dritte öffentliche Schlüssel zu einem dritten geheimen Schlüssel gehört, auf den das Sperrsystem Zugriff hat, wobei durch jeden der zweiten öffentlichen Schlüssel und den ersten geheimen Schlüssel der kryptografischen Vorrichtung ein Identifikator bestimmbar ist, der das Paar bestehend aus der kryptografischen Vorrichtung und dem Computersystem, welchem der betreffende zweite öffentliche Schlüssel zugeordnet ist, identifiziert ist, Mitteln zum Empfang eines Sperrkommandos, Mitteln zur Erzeugung des Identifikators für jedes der Paare aus dem ersten öffentlichen Schlüssel der kryptografischen Vorrichtung, den zweiten geheimen Schlüsseln und dem dritten geheimen Schlüssel, und Mitteln zur Übertragung der Identifikatoren an die betreffenden Computersysteme zur Speicherung in deren Sperrlisten.

In einem weiteren Aspekt betrifft die Erfindung ein Computersystem mit Mitteln zum Empfang eines zweiten öffentlichen Schlüssels von dem Sperrsystem, Mitteln zur Übertragung des zweiten öffentlichen Schlüssels an ein Nutzer-Computersystem, welches mit der kryptografischen Vorrichtung gekoppelt ist, Mitteln zum Empfang des Identifikators für das aus der kryptografischen Vorrichtung und dem Computersystem gebildeten Paar, Mitteln zum Vergleich des Identifikators mit einer Sperrliste, wobei in der Sperrliste von dem Sperrsystem aufgrund des Sperrkommandos empfangene Identifikatoren gespeichert sind.

Die verschiedenen funktionellen Mittel des Sperrsystems und/oder des Computersystems können dabei durch ein oder mehrere Mikroprozessoren gebildet werden, die dazu ausgebildet sind, in einem Programmspeicher gespeicherte Programminstruktionen auszuführen, um auf diese Art und Weise die jeweilige Funktionalität zur Verfügung zu stellen.

Im Weiteren werden Ausführungsformen der Erfindung mit Bezugnahme auf die Zeichnungen näher erläutert.

Es zeigen:

Figur 1    ein Blockdiagramm einer ersten Ausführungsform eines erfindungsgemäßen Sperrsystems und erfindungsgemäßer Computersysteme,

Figur 2    ein Blockdiagramm einer zweiten Ausführungsform eines erfindungsgemäßen Sperrsystems und erfindungsgemäßer Computersysteme,

Figur 3    eine Ausführungsform eines erfindungsgemäßen Verfahrens zur Erzeugung eines Identifikators,

Figur 4    eine Ausführungsform eines erfindungsgemäßen Verfahrens zur Nutzung des Identifikators,

Figur 5    eine Ausführungsform eines erfindungsgemäßen Verfahrens zur Sperrung einer kryptografischen Vorrichtung.

Im Weiteren werden einander entsprechende Elemente der verschiedenen Ausführungsformen mit gleichen Bezugszeichen gekennzeichnet.

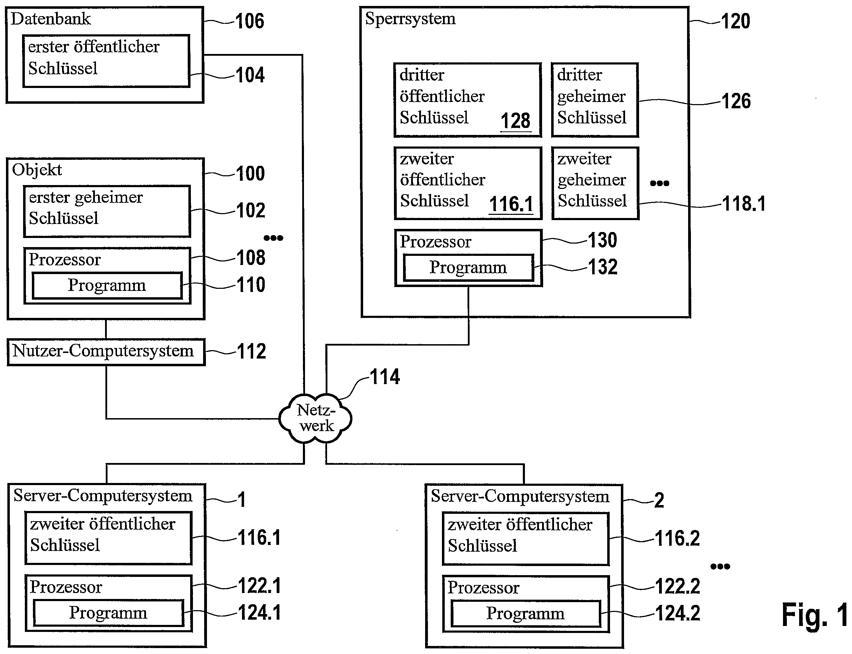

Die Figur 1 zeigt ein Datenverarbeitungssystem, welches mehrere Server-Computersysteme 1, 2, ... beinhaltet. Jedes der Server-Computersysteme 1, 2, ... kann zur Erbringung eines Online-Dienstes ausgebildet sein, wie zum Beispiel als Online-Shop, Online-Auktionsplattform oder als e-Government Plattform. Jedem der Server-Computersysteme 1, 2, ... ist ein individuelles asymmetrisches kryptografisches Schlüsselpaar zugeordnet, welches jeweils aus einem geheimen und einem öffentlichen Schlüssel besteht.

Eine kryptografische Vorrichtung 100 ist zur Verwendung mit den Server-Computersystemen 1, 2, ... ausgebildet. Die kryptografische Vorrichtung 100 kann als ID-Objekt, insbesondere als ID-Dokument, wie zum Beispiel als Chipkarte, als RFID-Tag oder als elektronisches Ausweisdokument ausgebildet sein.

Die kryptografische Vorrichtung 100 hat einen geschützten Speicherbereich, in dem ein erster geheimer Schlüssel 102 gespeichert ist. Zu dem ersten geheimen Schlüssel 102 gehört ein erster öffentlicher Schlüssel 104. Durch den ersten geheimen Schlüssel 102 und den ersten öffentlichen Schlüssel 104 wird ein erstes asymmetrisches kryptografisches Schlüsselpaar gebildet, durch welches die Identität der kryptografischen Vorrichtung 100 bestimmt ist.

Dieses Schlüsselpaar ist eindeutig für ein Objekt, d.h. die kryptografischen Vorrichtung 100, wird aber vorzugsweise nie direkt genutzt, sondern nur als Input für die Berechnung des Identifikators. Die beiden Systeme, d.h. die kryptografischen Vorrichtung 100 und das betreffende Server-Computersystem einerseits bzw. das Sperrsystem 120 und betreffende Server-Computersystem andererseits können den Identifikator berechnen, der für die Kombination Objekt und Server-Computersystem eindeutig ist. Das betreffende Server-Computersystem kann diesen Identifikator speichern, ggf. mit Hilfe einer Datenbank mit weiteren Informationen (wie z.B. Name, Kontoverbindung des Trägers der kryptografischen Vorrichtung 100) verbinden und das Objekt bei einer späteren Nutzung wiedererkennen.

Der erste öffentliche Schlüssel 104 kann in einem Speicher der kryptografischen Vorrichtung 100 und/oder in einer Datenbank 106 gespeichert sein. Die Datenbank 106 kann als ein sogenannter Verzeichnisserver ausgebildet sein. Die der kryptografischen Vorrichtung 100 zugeordneten Identifikationsdaten können als Zugriffsschlüssel für die Datenbank 106 verwendet werden. Bei diesen Identifikationsdaten kann es sich zum Beispiel um den Namen und das Geburtsdatum, die E-Mail-Adresse oder dergleichen eines Trägers der kryptografischen Vorrichtung 100 handeln. Ferner kann in der Datenbank 106 ein dem ersten Schlüsselpaar zugeordnetes Zertifikat gespeichert sein.

Die kryptografische Vorrichtung 100 hat ferner einen Prozessor 108 zur Ausführung von Programminstruktionen 110. Der Prozessor 108 ist zum Zugriff auf den ersten geheimen Schlüssel 102 ausgebildet, um durch Ausführung der Programminstruktionen 110 eine kryptografische Operation durchzuführen.

Das Objekt 100 kann mit einem Nutzer-Computersystem 112 gekoppelt sein. Beispielsweise beinhaltet das Nutzer-Computersystem 112 ein Lesegerät, mit Hilfe dessen das Nutzer-Computersystem 112 mit der kryptografischen Vorrichtung 100 kommunizieren kann. Das Lesegerät des Nutzer-Computersystems 112 kann beispielsweise als Chipkarten-Lesegerät oder als RFID-Lesegerät ausgebildet sein, je nachdem, welche Art von Kommunikationsschnittstelle die kryptografische Vorrichtung 100 aufweist. Die kryptografische Vorrichtung 100 kann aber auch einen integralen Bestandteil des Nutzer-Computersystems 112 bilden; insbesondere kann die kryptografische Vorrichtung 100 als ein sogenanntes Security Module ausgebildet sein.

Das Nutzer-Computersystem 112 kann auch als Mobilfunkgerät ausgebildet sein, wie zum Beispiel als ein sogenanntes Handy. In diesem Fall kann es sich bei der kryptografischen Vorrichtung 100 um eine SIM-Karte handeln.

Die kryptografische Vorrichtung 100 ist über das Nutzer-Computersystem 112 und das Netzwerk 114 mit den Server-Computersystemen 1, 2, ... koppelbar. Bei dem Netzwerk 114 kann es sich um ein privates oder ein öffentliches Netzwerk handeln, wie zum Beispiel das Internet.

Das Server-Computersystem 1 hat einen Speicher, in dem ein zweiter öffentlicher Schlüssel 116.1 gespeichert ist. Dem zweiten öffentlichen Schlüssel 116.1 ist ein zweiter geheimer Schlüssel 118.1 zugeordnet; durch den zweiten öffentlichen Schlüssel 116.1 und durch den zweiten geheimen Schlüssel 118.1 wird ein zweites asymmetrisches kryptografisches Schlüsselpaar gebildet, durch welches das Server-Computersystem 1 identifiziert ist. Der zweite geheime Schlüssel 118.1 ist in einem Sperrsystem 120 gespeichert. Das Sperrsystem 120 kann durch ein oder mehrere miteinander gekoppelte Rechnersysteme realisiert werden; zusätzlich kann das Sperrsystem 120 zum Beispiel ein Callcenter beinhalten, so dass ein Nutzer dort anrufen kann, um eine Sperrung zu veranlassen.

Das Server-Computersystem 1 beinhaltet ferner zumindest einen Prozessor 122.1 zur Ausführung von Programminstruktionen 124.1. Die Programminstruktionen 124.1 beinhalten ein Programmmodul zur Erbringung eines Online-Dienstes sowie ein Programmmodul zur Prüfung, ob eine Sperrbedingung vorliegt.

Entsprechend verhält es sich für das Server-Computersystem 2, welches eine von dem zweiten öffentlichen Schlüssel 116.1 des Server-Computersystems 1 verschiedenen zweiten öffentlichen Schlüssel 116.2 speichert. Zu dem zweiten öffentlichen Schlüssel 116.2 gehört ein zweiter geheimer Schlüssel, der in der Figur 1 nicht dargestellt ist, und der wie der zweite geheime Schlüssel 118.1 in dem Sperrsystem 120 gespeichert wird. Wie das Server-Computersystem 1 beinhaltet auch das Server-Computersystem 2 zumindest einen Prozessor 122.2 und Programminstruktionen 124.2.

Insgesamt kann eine im Prinzip beliebig große Anzahl I von solchen Server-Computersystemen i an das Netzwerk 114 angeschlossen sein, wobei jedes der Server-Computersysteme i einen individuellen zweiten öffentlichen Schlüssel 116.i speichert, zu dem ein zweiter geheimen Schlüssel 118.i gehört, der in dem Sperrsystem 120 gespeichert ist.

In dem Sperrsystem 120 ist ferner ein dritter geheimer Schlüssel 126 gespeichert. Das Sperrsystem 120 hat Zugriff auf einen dritten öffentlichen Schlüssel 128; durch den dritten geheimen Schlüssel 126 und den dritten öffentlichen Schlüssel 128 wird ein drittes asymmetrisches kryptografisches Schlüsselpaar gebildet, welches dem Sperrsystem 120 zugeordnet ist.

Das Sperrsystem 120 hat ferner zumindest einen Prozessor 130 zur Durchführung von Programminstruktionen 132. Mit Hilfe der Programminstruktionen 132 kann das Sperrsystem 120 kryptografische Operationen durchführen. Insbesondere kann das Sperrsystem 120 mit Hilfe der Programminstruktionen 132 aus dem zweiten geheimen Schlüssel 118.1 mit Hilfe des dritten öffentlichen Schlüssels 128 den zweiten öffentlichen Schlüssel 116.1 erzeugen.

Entsprechend verhält es sich für die weiteren zweiten öffentlichen Schlüssel 116.i, welche das Sperrsystem 120 ebenfalls durch Ausführung der Programminstruktionen 132 aus dem jeweiligen zweiten geheimen Schlüssel 118.i und dem dritten öffentlichen Schlüssel 128 berechnen kann.

Das Sperrsystem 120 ist über das Netzwerk 114 mit der Datenbank 106 sowie mit den Server-Computersystemen i koppelbar.

Zur Festlegung eines Identifikators für ein Paar bestehend beispielsweise aus der kryptografischen Vorrichtung 100 und dem Server-Computersystem i=1, wird beispielsweise wie folgt vorgegangen:

Das Sperrsystem 120 erzeugt aus dem zweiten geheimen Schlüssel 118.1 und dem dritten öffentlichen Schlüssel 128 den zweiten öffentlichen Schlüssel 116.1 und sendet diesen über das Netzwerk 114 an das Server-Computersystem 1, welches diesen zweiten öffentlichen Schlüssel 116.1 lokal abspeichert. Durch den zweiten öffentlichen Schlüssel 116.1 und dem ersten geheimen Schlüssel 102 ist dann bereits der Identifikator des Paars kryptografischer Vorrichtung 100/Server-Computersystem 1 festgelegt. In analoger Art und Weise erzeugt das Sperrsystem 120 die zweiten öffentlichen Schlüssel 116.i für jedes weitere Server-Computersystem i, um jeweils einen Identifikator für die Paare kryptografische Vorrichtung 100/Server-Computersystem i festzulegen.

Zur Nutzung eines von einem der Server-Computersysteme i zur Verfügung gestellten Online-Dienstes wird von dem Nutzer-Computersystem 112 eine entsprechende Anforderung an dieses Server-Computersystem i gesendet. Auf eine solche Anforderung antwortet das Server-Computersystem i mit seinem zweiten öffentlichen Schlüssel 116.i, welcher über das Netzwerk 114 und das Nutzer-Computersystem 112 zu der kryptografischen Vorrichtung 100 übertragen wird.

Durch Ausführung der Programminstruktionen 110 errechnet die kryptografische Vorrichtung 100 dann aus dem ersten geheimen Schlüssel 102 und dem zweiten öffentlichen Schlüssel 116.i den Identifikator für das Paar kryptografische Vorrichtung 100/Server-Computersystem i. Dieser Identifikator wird dann von der kryptografischen Vorrichtung 100 über das Nutzer-Computersystem 112 und das Netzwerk 114 zu dem betreffenden Server-Computersystem i übertragen, sodass die Beziehung der kryptografische Vorrichtung 100 bzw. deren Träger zu dem Server-Computersystem i identifiziert ist.

Das Server-Computersystem i kann dann beispielsweise vorzugsweise gesicherte Daten auf dem Nutzer-Computersystem 112 speichern, in denen dieser Identifikator angegeben ist. Die kryptografische Vorrichtung 100 ist über den Identifikator also eindeutig gegenüber dem Server-Computersystem i identifiziert, d.h. von anderen prinzipiell gleich aufgebauten kryptografischen Vorrichtungen, die ebenfalls für das Datenverarbeitungssystem Verwendung finden können, eindeutig unterscheidbar, wobei die Anonymität des Trägers der kryptografischen Vorrichtung 100 gewahrt werden kann und ohne dass personenbezogene Daten oder sonstige Daten aus der kryptografischen Vorrichtung 100 gegenüber dem Server-Computersystem i offengelegt werden müssen.

EP 2 399 218 B1

Beispielsweise erfolgt die Speicherung der Daten, die den Identifikator beinhalten, auf dem Nutzer-Computersystem 112 während einer ersten Session mit dem Server-Computersystem i. In einer nachfolgenden Session zwischen derselben kryptografischen Vorrichtung 100 und demselben Server-Computersystem i wird derselbe Identifikator erzeugt, sodass das Server-Computersystem i die zweite Session über die Daten, die denselben Identifikator angeben, der ersten Session zuordnen kann.

Wenn die kryptografische Vorrichtung 100 verloren geht oder aus einem sonstigen Grunde unbrauchbar wird, beispielsweise weil der erste geheime Schlüssel 102 ausgespäht worden ist oder ausgespäht sein könnte, so muss die weitere Verwendung der kryptografischen Vorrichtung 100 mit Bezug auf die Server-Computersysteme i gesperrt werden, um Missbrauch zu verhindern. Hierzu wird beispielsweise von dem Nutzer-Computersystem 112 eine Sperranforderung über das Netzwerk 114 an das Sperrsystem 120 gesendet, wobei die Sperranforderung Identifikationsdaten beinhaltet, die es dem Sperrsystem ermöglichen, durch einen Zugriff auf die Datenbank 106 über das Netzwerk 114 auf den ersten öffentlichen Schlüssel 104 zuzugreifen. Alternativ beinhaltet die Sperranforderung, die das Nutzer-Computersystem 112 an das Sperrsystem 120 sendet, bereits diesen ersten öffentlichen Schlüssel 104.

Aufgrund der Sperranforderung berechnet das Sperrsystem 120 aus dem ersten öffentlichen Schlüssel 104 und dem dritten geheimen Schlüssel 126 einen vierten öffentlichen Schlüssel. Aus dem vierten öffentlichen Schlüssel und dem zweiten geheimen Schlüssel 118.i wird dann durch Ausführung der Programminstruktionen 132 der Identifikator für das Paar kryptografische Vorrichtung 100/Server-Computersystem i berechnet. Das Sperrsystem 120 sendet diesen Identifikator dann über das Netzwerk 114 zu dem Server-Computersystem i, wo dieser Identifikator dann in einer Sperrliste gespeichert wird.

Bei einem nachfolgenden Versuch, einen von dem Server-Computersystem i zur Verfügung gestellten Online-Dienst mit Hilfe der kryptografischen Vorrichtung 100 in Anspruch zu nehmen, empfängt das Server-Computersystem i wiederum den Identifikator von dem Nutzer-Computersystem 112, welcher von der gesperrten kryptografischen Vorrichtung 100 berechnet worden ist. Das Server-Computersystem i vergleicht den von dem Nutzer-Computersystem 112 empfangenen Identifikator mit den in der Sperrliste gespeicherten Identifikatoren.

Da die kryptografische Vorrichtung 100 zuvor gesperrt worden ist, befindet sich der von kryptografischen Vorrichtung 100 berechnete Identifikator in dieser Sperrliste, sodass das Server-Computersystem i die kryptografische Vorrichtung 100 als gesperrt erkennt. Das Server-Computersystem i wird dann gegenüber dem Nutzer-Computersystem 112 eine Fehlermeldung abgeben und die Erbringung des gewünschten Online-Dienstes verweigern.

Vorzugsweise werden durch das Sperrsystem 120 aufgrund des Empfangs der Sperranforderung von dem Nutzer-Computersystem 112 die Identifikatoren sämtlicher möglicher Paare der kryptografischen Vorrichtung 100 und der Server-Computersysteme i errechnet und an die betreffenden Server-Computersysteme i übertragen, die jeweils den sie betreffenden Identifikator in deren lokalen Sperrlisten speichern. Aufgrund einer einzigen Sperranforderung kann also die kryptografische Vorrichtung 100 gegenüber sämtlichen der Server-Computersysteme i gesperrt werden.

Das Datenverarbeitungssystem der Figur 1 kann je nach Ausführungsform durch eine Vielzahl von Nutzern verwendet werden, die jeweils über eine kryptografische Vorrichtung verfügen, die der in der Figur 1 exemplarisch gezeigten kryptografischen Vorrichtung 100 entspricht.

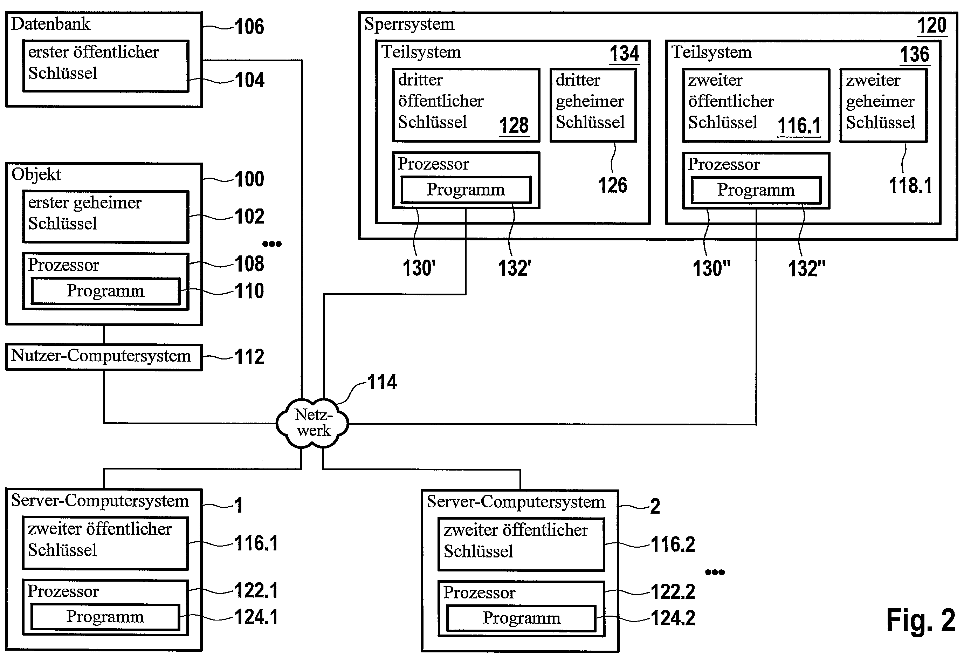

Die Figur 2 zeigte eine Weiterbildung der Ausführungsform der Figur 1. Bei der Figur 2 wird das Sperrsystem 120 durch ein erstes Teilsystem 134 und zumindest ein zweites Teilsystem 136 gebildet. In dem ersten Teilsystem 134 ist der dritte geheime Schlüssel 126 gespeichert; zu dem Teilsystem 134 gehört zumindest ein Prozessor 130' zur Ausführung von Programminstruktionen 132'. In dem Teilsystem 136 ist hingegen der zweite geheime Schlüssel 118.1 gespeichert; zusätzlich können weitere zweite geheime Schlüssel zumindest einer Teilmenge der Server-Computersysteme 1, 2, ... in dem Teilsystem 136 gespeichert sein.

Die Teilsysteme 134 und 136 sind lose, zum Beispiel! über das Netzwerk 114, miteinander gekoppelt.

Für die Erzeugung des zweiten öffentlichen Schlüssels, wie zum Beispiel des zweiten öffentlichen Schlüssels 116.1, wird von dem Teilsystem 136 der dritte öffentliche Schlüssel 128 des Teilsystems 134 verwendet, in dem dieser beispielsweise über das Netzwerk 114 von dem Teilsystem 134 an das Teilsystem 136 übertragen wird. Für die Verarbeitung einer Sperranforderung wird hingegen der vierte öffentliche Schlüssel durch Ausführung der Programminstruktionen 132' durch das Teilsystem 134 berechnet und zum Beispiel über das Netzwerk 114 zu dem Teilsystem 136 übertragen, wo mit Hilfe der Programminstruktionen 132" aus dem vierten öffentlichen Schlüssel und dem zweiten geheimen Schlüssel 118.1 der Identifikator für das Paar kryptografische Vorrichtung 100/Server-Computersystem 1 berechnet wird. Dieser Identifikator wird dann von dem Teilsystem 136 über das Netzwerk 114 an das betreffende Server-Computersystem 1 übertragen, sodass das Server-Computersystem 1 diesen Identifikator in seiner Sperrliste speichern kann.

Von besonderem Vorteil ist hierbei, dass zur Sperrung der kryptografischen Vorrichtung 100 ein Zugriff auf sowohl den zweiten geheimen Schlüssel 118.1 als auch auf den dritten geheimen Schlüssel 126 erforderlich ist, sodass also keines der Teilsysteme 134 oder 136 alleine eine solche Sperrung durchführen kann. Auf diese Art und Weise ist hier ein "4-Augen-Prinzip" für die Durchführung der Sperrung implementiert.

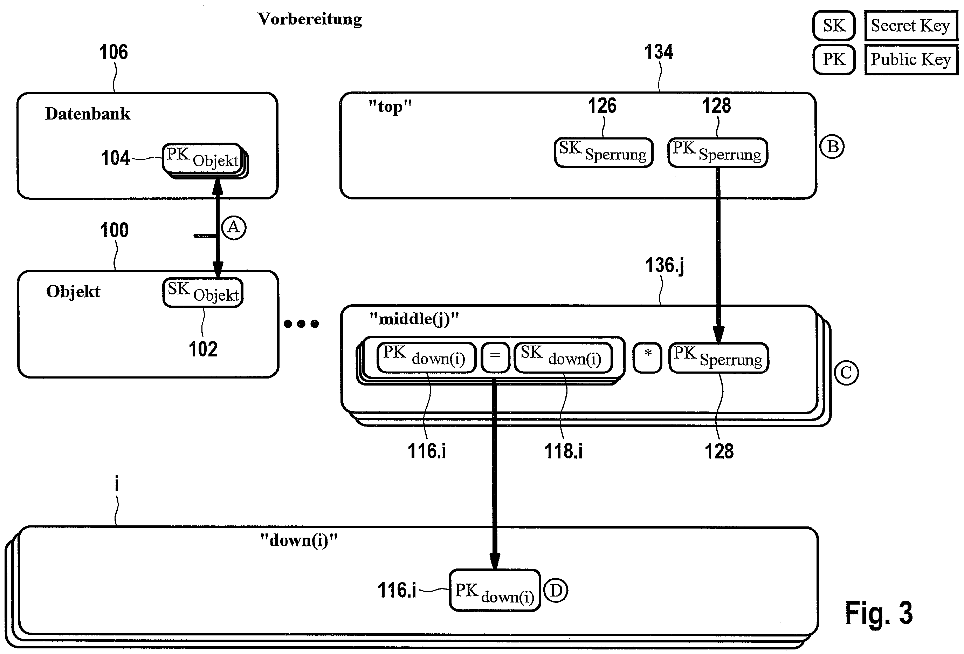

Die Figur 3 zeigt eine Ausführungsform eines entsprechenden erfindungsgemäßen Verfahrens, wobei hier die Vorbereitung, d.h. die Festlegung der Identifikatoren für die Server-Computersysteme i Paare, gezeigt ist.

Der erste geheime Schlüssel 102 wird im Weiteren als $SK_{Objekt}$ und der erste öffentliche Schlüssel 104 als $PK_{Objekt}$ bezeichnet. Der zweite öffentliche Schlüssel 116.i wird im Weiteren als $PK_{down(i)}$ und der zweite geheime Schlüssel 118.i als $SK_{down(i)}$ bezeichnet. Der dritte öffentliche Schlüssel 128 wird im Weiteren $PK_{Sperrung}$ und der dritte geheime Schlüssel 126 mit $SK_{Sperrung}$ bezeichnet. Der Schlüssel $PK_{Objek}$ wird zum Beispiel in der öffentlich zugänglichen Datenbank 106 gespeichert (Schritt A) und die Schlüssel $PK_{Sperrung}$ und $SK_{Sperrung}$ werden zum Beispiel in dem Teilsystem 134 gespeichert (Schritt B).

Das Sperrsystem 120 wird hier durch ein einziges Teilsystem 134 und eine Anzahl von J Teilsystemen 136.j gebildet, wobei $1 \leq j \leq J$ ist. Das Teilsystem 134 ist in der Figur 3 mit "top" und die Teilsysteme 136.j mit "middle(j)" bezeichnet. Die Server-Computersysteme i sind in der Figur 3 mit "down(i)" bezeichnet.

Bei der hier betrachteten Ausführungsform ist die Menge der Server-Computersysteme i in Teilmengen aufgeteilt, wobei jedes der Teilsysteme 136.j einer solchen Teilmenge von Server-Computersystemen i zugeordnet ist und über die zweiten geheimen Schlüssel $SK_{down(i)}$ der betreffenden Teilmenge verfügt.

Zur Initialisierung des Systems erhält jedes der Server-Computersysteme i einen zweiten öffentlichen Schlüssel $PK_{down(i)}$ von dem zuständigen Teilsystem 136.j, indem $PK_{down(i)}$ von dem Teilsystem 136.j wie folgt berechnet wird (Schritt C):

$$PK_{down(i)} = SK_{down(i)} \cdot PK_{Sperrung}$$

Vorzugsweise handelt es sich bei "·" um die Operation einer kryptographisch sicheren Gruppe. Dabei kann es sich um die Multiplikation ganzer Zahlen modulo einer Primzahl oder um die Skalarmultiplikation eines Punktes auf einer elliptischen Kurve handeln, d.h. der $SK_{down(i)}$-fachen Addition des Punktes $PK_{Sperrung}$. Die "·" Operation soll effizient berechenbar sein, die inverse Operation (d.h. die Lösung des Diffie-Hellman-Problems) soll aber schwer zu lösen sein.

Der so berechnete Schlüssel $PK_{down(i)}$ wird dann in dem betreffenden Server-Computersystem i gespeichert (Schritt D).

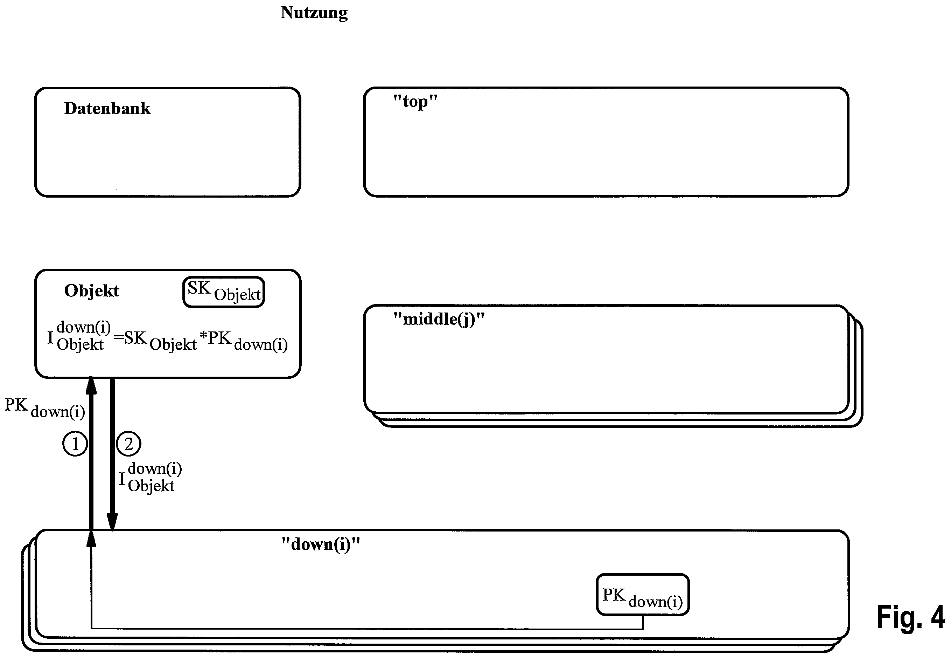

Nach der Vorbereitung gemäß Fig. 3 kann die Nutzung gemäß Fig. 4 wie folgt erfolgen: Wenn eines der Server-Computersysteme i von dem Nutzer-Computersystem 112 der kryptografischen Vorrichtung 100 eine Dienst-Anforderung erhält, so sendet das Server-Computersystem i seinen zweiten öffentlichen Schlüssel $PK_{down(i)}$ an die kryptografische Vorrichtung 100, wie in der Fig. 4 gezeigt (Schritt 1). Die kryptografische Vorrichtung 100 berechnet dann aus $PK_{down(i)}$ und dem ersten geheimen Schlüssel $SK_{Objekt}$ den Identifikator des Paars kryptografische Vorrichtung 100/Server-Computersystem i, wobei dieser Identifikator im Folgenden mit $I_{Objekt}^{down(i)}$ bezeichnet wird, d.h.

$$I_{Objekt}^{down(i)} = SK_{Objekt} \cdot PK_{down(i)}$$

Dieser Identifikator $I_{Objekt}^{down(i)}$ wird dann von dem Nutzer-Computersystem 112 an das Server-Computersystem i gesendet (Schritt 2), sodass die kryptografische Vorrichtung 100 in ihrer Beziehung zu dem Server-Computersystem i eindeutig identifiziert ist.

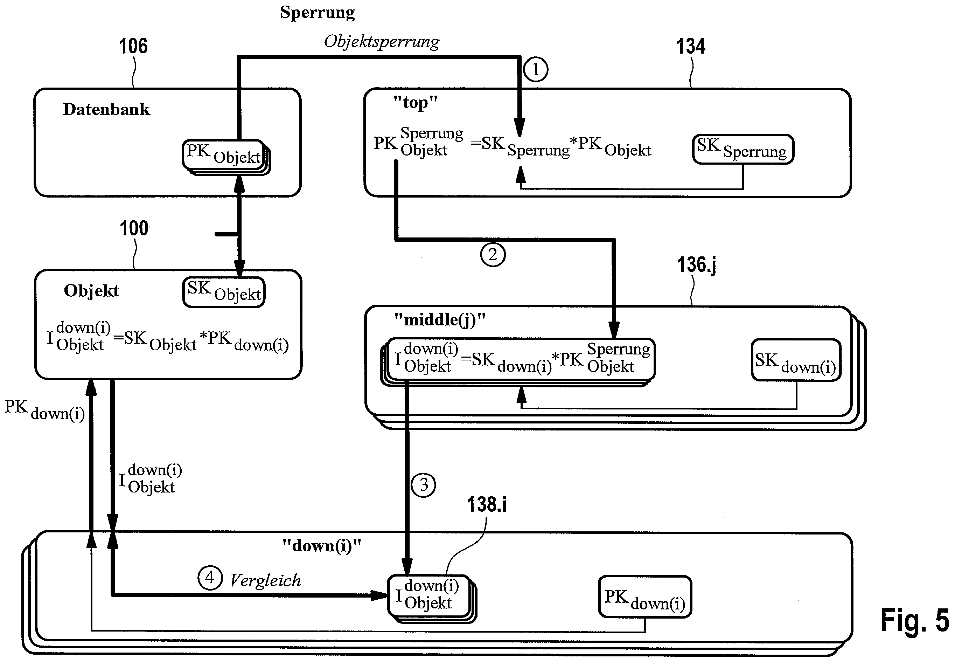

Die Figur 5 zeigt den Ablauf zur Sperrung der kryptografischen Vorrichtung 100. Das Teilsystem 134 greift auf die Datenbank 106 zu, um von dort den ersten öffentlichen Schlüssel $PK_{Objekt}$ der kryptografischen Vorrichtung 100 auszulesen (Schritt 1). Das Teilsystem 134 berechnet dann aus $PK_{Objekt}$ und $SK_{Sperrung}$ den vierten öf-fentlichen Schlüssel $PK_{Objekt}^{Sperrung}$, d.h.

$$PK_{Objekt}^{Sperrung} = SK_{Sperrung} \cdot PK_{Objekt}$$

Das Teilsystem 134 überträgt $PK_{Objekt}^{Sperrung}$ an sämtliche der zweiten Teilsysteme 136.j (Schritt 2). Jedes der Teilsysteme 136.j generiert dann die Identifikatoren $I_{Objekt}^{down(i)}$ der den Teilsystemen 136.j jeweils zugeordneten Teilmengen von Server-Computersystemen und übersendet diese Identifikatoren $I_{Objekt}^{down(i)}$ jeweils an die ent-sprechenden Server-Computersysteme i, d.h. der Identifikator $I_{Objekt}^{down(i)}$ wird von dem zuständigen Teilsystem 136.j an das Server-Computersystem i übertragen und dort in der Sperrliste 138.i gespeichert (Schritt 3).

Die Berechnung des Identifikators $I_{Objekt}^{down(i)}$ durch das Teilsystem 136.j erfolgt dabei gemäß

$$I_{Objekt}^{down(i)} = SK_{down(i)} \cdot PK_{Objekt}^{Sperrung}$$

Wenn nach der Sperrung der kryptografischen Vorrichtung 100 der Versuch einer Nutzung gemäß Figur 4 erfolgt, so vergleicht das Server-Computersystem i nach Empfang von $I_{Objekt}^{down(i)}$ von der kryptografischen Vorrichtung 100 bzw. von dem Nut-zer-Computersystem 112 das empfangene $I_{Objekt}^{down(i)}$ mit seiner Sperrliste 138.i (Schritt 4). Wenn dieser Identifikator $I_{Objekt}^{down(i)}$ Teil der Sperrliste 138.i ist, so erfolgt durch das Server-Computersystem i eine Sperrung, sodass keine Nutzung des von dem Server-Computersystems i zur Verfügung gestellten Online-Dienstes mit der kryptografischen Vorrichtung 100 möglich ist. Beispielsweise wird durch das Server-Computersystem i die Ablehung der von der kryptografischen Vorrichtung 100 bzw. von dem Nutzer-Computersystem 112 empfangenen Dienst-Anforderung signali-siert. Wenn hingegen das empfangene $I_{Objekt}^{down(i)}$ nicht zu der Sperrliste 138.i gehört, so kann das Server-Computersystem i den mit der Dienst-Anforderung angeforderten Dienst erbringen.

Der im Rahmen der Sperrung von dem Teilsystem 136.j berechnete Identifikator $I_{Objekt}^{down(i)}$ ist identisch zu dem von der kryptografischen Vorrichtung 100 berechneten Identifikator $I_{Objekt}^{down(i)}$, und zwar aus folgendem Grunde:

Von der kryptografischen Vorrichtung 100 wird im Rahmen der Nutzung $I_{Objekt}^{down(i)}$ wie folgt berechnet:

$$I_{Objekt}^{down(i)} = SK_{Objekt} \cdot PK_{down(i)}$$
$$= SK_{Objekt} \cdot SK_{down(i)} \cdot PK_{Sperrung}$$
$$= SK_{Objekt} \cdot SK_{down(i)} \cdot SK_{Sperrung} \cdot G$$

Dies ist gleich des bei der Sperrung von dem Teilsystem 136.j errechneten $I_{Objekt}^{down(i)}$, nämlich

$$I_{Objekt}^{down(i)} = SK_{down(i)} \cdot PK_{Objekt}^{Sperrung} = SK_{down(i)} \cdot SK_{Sperrung} \cdot PK_{Objekt}$$
$$= SK_{down(i)} \cdot SK_{Sperrung} \cdot SK_{Objekt} \cdot G,$$

wobei es sich bei G um den sogenannten Basispunkt einer elliptischen Kurve, d.h. den Erzeuger oder Generator der kryptographischen Gruppe, und bei dem "·" Operator um eine Skalarmultiplikation handeln kann. Anstelle von elliptischer Kurvenkryptografie können auch andere kryptografische Verfahren angewendet werden, wie zum Beispiel Gruppen auf Basis von Primkörpern, insbesondere RSA.

Bezugszeichenliste

100     kryptografische Vorrichtung
102     erster geheimer Schlüssel
104     erster öffentlicher Schlüssel

| 106 | Datenbank |
| 108 | Prozessor |
| 110 | Programminstruktionen |
| 112 | Nutzer-Computersystem |
| 114 | Netzwerk |
| 116.1 | zweiter öffentlicher Schlüssel |
| 116.2 | zweiter öffentlicher Schlüssel |
| 118.1 | zweiter geheimer Schlüssel |
| 120 | Sperrsystem |
| 122.1 | Prozessor |
| 122.2 | Prozessor |
| 124.1 | Programminstruktionen |
| 124.2 | Programminstruktionen |
| 126 | dritter geheimer Schlüssel |
| 128 | dritter öffentlicher Schlüssel |
| 130 | Prozessor |
| 130' | Prozessor |
| 130" | Prozessor |
| 132 | Programminstruktionen |
| 132' | Programminstruktionen |
| 132" | Programminstruktionen |
| 134 | Teilsystem |
| 136 | Teilsystem |

**Patentansprüche**

1. Verfahren zur Sperrung einer kryptografischen Vorrichtung (100), wobei einem Paar bestehend aus der kryptografischen Vorrichtung (100) und einem Computersystem (1,2,...,i,...I) ein Identifikator nach einem Verfahren zur Erzeugung dieses Identifikators zur Identifizierung des Paars zugeordnet ist, wobei die kryptografische Vorrichtung (100) einen ersten geheimen Schlüssel (102) aufweist, wobei dem Computersystem (i) ein zweiter geheimer Schlüssel (118.i) zugeordnet ist, wobei ein Sperrsystem (120) zur Sperrung der Verwendung der kryptografischen Vorrichtung (100) und zum Zugriff auf den zweiten geheimen Schlüssel (118.i) des Computersystems (i) ausgebildet ist, wobei das Sperrsystem (120) einen dritten geheimen Schlüssel (126) aufweist, und wobei zur Erzeugung des Identifikators die folgenden Schritte durchgeführt werden:

   - Erzeugung eines zweiten öffentlichen Schlüssels (116.i) aus dem zweiten geheimen Schlüssel (118.i) und einem dem dritten geheimen Schlüssel (126) zugeordneten dritten öffentlichen Schlüssel (128) durch das Sperrsystem (120),
   - Übertragung des zweiten öffentlichen Schlüssels (116.i) an das Computersystem (i),
   - Erzeugung des Identifikators durch die kryptografische Vorrichtung (100) aus dem ersten geheimen Schlüssel (102) und dem zweiten öffentlichen Schlüssel (116.i)

   wobei das Verfahren zur Sperrung folgende Schritte umfasst:

   - Berechnung des Identifikators durch das Sperrsystem (120) aus einem ersten öffentlichen Schlüssel (104), dem zweiten geheimen Schlüssel (118.i) und dem dritten geheimen Schlüssel (126), wobei der erste öffentliche Schlüssel (104) zu dem ersten geheimen Schlüssel (102) der kryptographischen Vorrichtung (100) gehört und zusammen mit diesem ein asymmetrisches kryptographisches Schlüsselpaar bildet,
   - Übertragung des Identifikators zu dem Computersystem (i),
   - Speicherung des Identifikators in einer Sperrliste (138.i) des Computersystems (i).

2. Verfahren nach Anspruch 1, wobei der Identifikator von der kryptografischen Vorrichtung an das Computersystem übertragen wird.

3. Verfahren nach Anspruch 1 oder 2, wobei das Sperrsystem erste (134) und zweite Teilsysteme (136) aufweist, wobei nur das erste Teilsystem Zugriff auf den dritten geheimen Schlüssel und nur das zweite Teilsystem Zugriff auf den zweiten geheimen Schlüssel hat, wobei das zweite Teilsystem zur Erzeugung des zweiten öffentlichen Schlüssels aus dem zweiten geheimen Schlüssel und dem dritten öffentlichen Schlüssel ausgebildet ist.

4. Verfahren nach Anspruch 3, wobei das Computersystem zu einer Menge von Computersystemen gehört, und wobei das Sperrsystem mehrere der zweiten Teilsysteme (136.j) aufweist, wobei jedem der zweiten Teilsysteme eine Untermenge der Computersysteme zugeordnet ist, wobei jedem der Computersysteme je ein zweiter geheimer Schlüssel zugeordnet ist, wobei jedes der zweiten Teilsysteme auf diejenigen zweiten geheimen Schlüssel zugreifen kann, die der Teilmenge der Computersysteme dieses zweiten Teilsystems zugeordnet sind, wobei für jedes Paar, das aus der kryptografischen Vorrichtung und einem der Computersysteme gebildet werden kann, ein identifikator durch den ersten geheimen Schlüssel und den zweiten öffentlichen Schlüssel des betreffenden Computersystems definiert ist.

5. Verfahren nach einem der vorhergehenden Ansprüche, wobei die ersten und zweiten Teilsysteme des Sperrsystems über ein öffentliches Netzwerk (114) miteinander gekoppelt sind.

6. Verfahren nach einem der vorhergehenden Ansprüche, wobei zur Berechnung des Identifikators durch das erste Teilsystem ein vierter öffentlicher Schlüssel aus dem dritten geheimen Schlüssel und dem ersten öffentlichen Schlüssel erzeugt wird, der vierte öffentliche Schlüssel von dem ersten Teilsystem an das dem betreffenden Computersystem zugeordnete zweite Teilsystem übertragen wird, sodass das zweite Teilsystem aus dem vierten öffentlichen Schlüssel und dem dem betreffenden Computersystem zugeordneten zweiten geheimen Schlüssel den Identifikator erzeugt.

7. Verfahren nach Anspruch 6, wobei das erste Teilsystem aufgrund eines Sperrkommandos den vierten öffentlichen Schlüssel erzeugt und den vierten öffentlichen Schlüssel daraufhin an sämtliche der zweiten Teilsysteme überträgt, wobei die zweiten Teilsysteme daraufhin den Identifikator für jedes mögliche Paar ermitteln und an die Computersysteme übermitteln, sodass in jedem der Computersysteme der das betreffende Computersystem und die kryptografische Vorrichtung beinhaltendes Paar identifizierende Identifikator in der jeweiligen Sperrliste gespeichert wird.

8. Verfahren nach einem der vorhergehenden Ansprüche, wobei es sich bei der kryptografischen Vorrichtung um ein Wert- oder Sicherheitsdokument, insbesondere eine Chipkarte handelt.

9. Computerprogrammprodukt, insbesondere digitales Speichermedium, mit ausführbaren Instruktionen zur Durchführung eines Verfahrens nach einem der vorhergehenden Ansprüche.

10. Sperrsystem (120) zur Sperrung der Verwendung einer kryptografischen Vorrichtung (100) mit Bezug auf eine Menge von Computersystemen (1, 2, ..., i, ...l), wobei die kryptografische Vorrichtung (100) einen ersten geheimen Schlüssel (102) aufweist, wobei jedem der Computersysteme (i) je eine Sperrliste (138.i) und ein zweiter geheimer Schlüssel (118.i) zugeordnet ist, mit:

   - Mitteln (130, 132) zur Erzeugung eines zweiten öffentlichen Schlüssels (116.i) für jeden der zweiten geheimen Schlüssel (118.i) aus dem betreffenden zweiten geheimen Schlüssel (118.i) und einem dritten öffentlichen Schlüssel (128), wobei der dritte öffentliche Schlüssel (128) zu einem dritten geheimen Schlüssel (126) gehört, auf den das Sperrsystem (120) Zugriff hat, wobei durch jeden der zweiten öffentlichen Schlüssel (116.i) und den ersten geheimen Schlüssel (102) der kryptografischen Vorrichtung (100) ein Identifikator bestimmbar ist, der das Paar bestehend aus der kryptografischen Vorrichtung (100) und dem Computersystem, welchem der betreffende zweite öffentliche Schlüssel (116.i) zugeordnet ist, identifiziert,
   - Mitteln (130, 132) zum Empfang eines Sperrkommandos,
   - Mitteln (130, 132) zur Erzeugung des Identifikators für jedes der Paare aus einem ersten öffentlichen Schlüssel (104) der kryptografischen Vorrichtung (100), den zweiten geheimen Schlüsseln (118.i) und dem dritten geheimen Schlüssel (126), wobei der erste öffentliche Schlüssel (104) zu dem ersten geheimen Schlüssel (126) der kryptographischen Vorrichtung (100) gehört und zusammen mit diesem ein asymmetrisches kryptographisches Schlüsselpaar bildet,
   - Mitteln (130, 132) zur Übertragung der Identifikatoren an die betreffenden Computersysteme (i) zur Speicherung in deren jeweiligen Sperrlisten (138.i).

11. Sperrsystem nach Anspruch 10, wobei das Sperrsystem erste (134) und zweite Teilsysteme (136) aufweist, wobei nur das erste Teilsystem Zugriff auf den dritten geheimen Schlüssel und nur das zweite Teilsystem Zugriff auf den zweiten geheimen Schlüssel hat, wobei das zweite Teilsystem zur Erzeugung des zweiten öffentlichen Schlüssels aus dem zweiten geheimen Schlüssel und dem dritten öffentlichen Schlüssel ausgebildet ist.

**12.** Sperrsystem nach Anspruch 11, wobei das erste Teilsystem die Mittel (130', 132') zum Empfang des Sperrkommandos beinhaltet, wobei das Sperrkommando Identifikationsdaten zur Identifizierung der kryptografischen Vorrichtung beinhaltet, und wobei das erste Teilsystem zum Zugriff auf eine Datenbank (106) mit Hilfe der Identifikationsdaten ausgebildet ist, um aus der Datenbank den ersten öffentlichen Schlüssel des Identifikators auszulesen.

**13.** Computersystem (1,2,...,i,..l) mit

- Mitteln (122.i, 124.i) zum Empfang eines zweiten öffentlichen Schlüssels (116.i) von einem Sperrsystem (120) nach einem der Ansprüche 10 bis 12,
- Mitteln (122.i, 124.i) zur Übertragung des zweiten öffentlichen Schlüssels (116.i) an ein Nutzer-Computersystem (112), welches mit der kryptografischen Vorrichtung (100) koppelbar ist,
- Mitteln (122.i, 124.i) zum Empfang des Identifikators für das aus der kryptografischen Vorrichtung (100) und dem Computersystem (i) gebildete Paar,
- Mitteln (122.i, 124.i) zum Vergleich des Identifikators mit einer Sperrliste (138.i), wobei in der Sperrliste (138.i) von dem Sperrsystem aufgrund des Sperrkommandos empfangene Identifikatoren gespeichert sind.

**Claims**

**1.** A method for blocking a cryptographic device (100), wherein a pair consisting of the cryptographic device (100) and a computer system (1, 2, ..., i, ...l) is associated with an identifier, after a method for generating this identifier, for identifying the pair, wherein the cryptographic device (100) has a first secret key (102), wherein a second secret key (118.i) is associated with the computer system (i), wherein a blocking system (120) for blocking the use of the cryptographic device (100) and for accessing the second secret key (118.i) of the computer system (i) is provided, wherein the blocking system (120) has a third secret key (126), and wherein the following steps are carried out for generating the identifier:

- generating a second public key (116.i), by way of the blocking system (120), from the second secret key (118.i) and a third public key (128) associated with the third secret key (126),
- transmitting the second public key (116.i) to the computer system (i), and
- generating the identifier, by way of the cryptographic device (100), from the first secret key (102) and the second public key (116.i),

wherein the blocking method comprises the following steps:

- computing the identifier from a first public key (104), the second secret key (118.i) and the third secret key (126) by way of the blocking system (120),
wherein the first public key (104) belongs to the first secret key (102) of the cryptographic device (100) and together therewith forms an asymmetric cryptographic key pair,
- transmitting the identifier to the computer system (i),
- storing the identifier in a blocking list (138.i) of the computer system (i).

**2.** The method according to claim 1, wherein the identifier is transmitted from the cryptographic device to the computer system.

**3.** The method according to claim 1 or 2, wherein the blocking system has a first subsystem (134) and a second subsystem (136), wherein only the first subsystem has access to the third secret key, and only the second subsystem has access to the second secret key, wherein the second subsystem is provided for generating the second public key from the second secret key and the third public key.

**4.** The method according to claim 3, wherein the computer system belongs to a set of computer systems, and wherein the blocking system has a plurality of the second subsystems (136.j), wherein a subset of the computer systems is associated with each of the second subsystems, wherein one second secret key is associated with each of the computer systems, wherein each of the second subsystems is able to access the second secret keys which are associated with the subset of the computer systems of this second subsystem, wherein, for each pair, which may be formed from the cryptographic device and one of the computer systems, an identifier is defined by the first secret key and the second public key of the computer system in question.

5. The method according to any one of the preceding claims, wherein the first and second subsystems of the blocking system are coupled to one another via a public network (114).

6. The method according to any one of the preceding claims, wherein, for computing the identifier by means of the first subsystem, a fourth public key is generated from the third secret key and the first public key, and the fourth public key is transmitted from the first subsystem to the second subsystem which is associated with the computer system in question, so that the second subsystem generates the identifier from the fourth public key and the second secret key which is associated with the computer system in question.

7. The method according to claim 6, wherein, as a result of a blocking command, the first subsystem generates the fourth public key and then transmits the fourth public key to all of the second subsystems, wherein the second subsystems then determine the identifier for each possible pair and transmit the same to the computer systems, so that in each of the computer systems the identifier which identifies the pair containing the computer system in question and the cryptographic device is stored in the respective blocking list.

8. The method according to any one of the preceding claims, wherein the cryptographic device is a value document or security document, in particular a chip card.

9. A computer program product, in particular digital storage medium, having executable instructions for carrying out a method according to any one of the preceding claims.

10. A blocking system (120) for blocking the use of a cryptographic device (100) with regard to a set of computer systems (1, 2, ..., i, ...l), wherein the cryptographic device (100) has a first secret key (102), wherein one blocking list (138.i) and one second secret key (118.i) are associated with each of the computer systems (i), said blocking system having:

- means (130, 132) for generating a second public key (116.i) for each of the second secret keys (118.i) from the second secret key (118.i) in question and a third public key (128), wherein the third public key (128) belongs to a third secret key (126), to which the blocking system (120) has access, wherein an identifier can be determined by each of the second public key (116.i) and the first secret key (102) of the cryptographic device (100), which identifier identifies the pair consisting of the cryptographic device (100) and the computer system to which the second public key (116.i) in question is associated,
- means (130, 132) for receiving a blocking command,
- means (130, 132) for generating the identifier for each of the pairs from a first public key (104) of the cryptographic device (100), the second secret keys (118.i) and the third secret key (126),
wherein the first public key (104) belongs to the first secret key (126) of the cryptographic device (100) and together therewith forms an asymmetric key pair,
- means (130, 132) for transmitting the identifiers to the computer systems (i) in question for storing in the respective blocking lists (138.i) thereof.

11. The blocking system according to claim 10, wherein the blocking system has a first subsystem (134) and a second subsystem (136), wherein only the first subsystem has access to the third secret key, and only the second subsystem has access to the second secret key, wherein the second subsystem is provided for generating the second public key from the second secret key and the third public key.

12. The blocking system according to claim 11, wherein the first subsystem contains the means (130', 132') for receiving the blocking command, wherein the blocking command contains identification data for identifying the cryptographic device, and wherein the first subsystem is designed to access a database (106) with the aid of the identification data in order to read the first public key of the identifier from the database.

13. A computer system (1, 2, ...i, ...l) having

- means (122.i, 124.i) for receiving a second public key (116.i) from a blocking system (120) according to any one of claims 10 to 12,
- means (122.i, 124.i) for transmitting the second public key (116.i) to a user computer system (112) which can be coupled to the cryptographic device (100),
- means (122.i, 124.i) for receiving the identifier for the pair formed from the cryptographic device (100) and the computer system (i), and
- means (122.i, 124.i) for comparing the identifier to a blocking list (138.i), wherein identifiers received from the blocking system as the result of the blocking command are stored in the blocking list (138.i).

**Revendications**

1. Procédé de blocage d'un dispositif cryptographique (100), dans lequel un identificateur est associé à un couple constitué du dispositif cryptographique (100) et d'un système informatique (1, 2, ..., i, ..., l) selon un procédé permettant de créer cet identificateur pour l'identification du couple, où le dispositif cryptographique (100) présente une première clé privée (102), où une deuxième clé privée (118.i) est associée au système informatique (i), où un système de blocage (120) est conçu pour le blocage de l'utilisation du dispositif cryptographique (100) et pour l'accès à la deuxième clé privée (118.i) du système informatique (i), où le système de blocage (120) présente une troisième clé privée (126), et où, pour la création de l'identificateur, les étapes suivantes sont effectuées :

   - la création d'une deuxième clé publique (116.i) à partir de la deuxième clé privée (118.i) et d'une troisième clé publique (128) associée à la troisième clé privée (126) par le système de blocage (120),
   - le transfert de la deuxième clé publique (116.i) vers le système informatique (i),
   - la création de l'identificateur par le dispositif cryptographique (100) à partir de la première clé privée (102) et de la deuxième clé publique ((116.i),

   où le procédé de blocage comprend les étapes suivantes :

   - le calcul de l'identificateur par le système de blocage (120) à partir d'une première clé publique (104), de la deuxième clé privée (118.i) et de la troisième clé privée (126),
   où la première clé publique (104) correspond à la première clé privée (102) du dispositif cryptographique (100) et forme conjointement avec celui-ci une paire de clés cryptographiques asymétrique,
   - le transfert de l'identificateur vers le système informatique (i),
   - le stockage de l'identificateur dans une liste de blocage (138.i)du système informatique (i).

2. Procédé selon la revendication 1, dans lequel l'identificateur est transféré du dispositif cryptographique vers le système informatique.

3. Procédé selon la revendication 1 ou la revendication 2, dans lequel le système de blocage présente des premiers (134) et deuxièmes systèmes partiels (136), où uniquement le premier système partiel a un accès à la troisième clé privée et uniquement le deuxième système partiel a un accès à la deuxième clé privée, où le deuxième système partiel est conçu pour la création de la deuxième clé publique à partir de la deuxième clé privée et de la troisième clé publique.

4. Procédé selon la revendication 3, dans lequel le système informatique fait partie d'une quantité de systèmes informatiques et où le système de blocage présente plusieurs parmi les deuxièmes systèmes partiels (136.j), où, à chacun des deuxièmes systèmes partiels est associée un sous-ensemble des systèmes informatiques, où à chacun des systèmes informatiques est associée respectivement une deuxième clé privée, où chacun des deuxièmes systèmes partiels peut avoir un accès à la deuxième clé privée en question qui est associée à l'ensemble partiel des systèmes informatiques de ce deuxième système partiel, où, pour chaque couple, qui peut être formé à partir du dispositif cryptographique et l'un des systèmes informatiques, un identificateur est défini par la première clé privée et la deuxième clé publique du système informatique concerné.

5. Procédé selon l'une des revendications précédentes, dans lequel les premiers et deuxièmes systèmes partiels du système de blocage sont couplés par le biais d'un réseau public (114).

6. Procédé selon l'une des revendications précédentes, dans lequel, pour le calcul de l'identificateur par le premier système partiel, une quatrième clé publique est générée à partir de la troisième clé privée et de la première clé publique, la quatrième clé publique est transférée du premier système partiel au deuxième système partiel associé au système informatique concerné de sorte que le deuxième système partiel génère l'identificateur à partir de la quatrième clé publique et la deuxième clé privée associée au système informatique concerné.

7. Procédé selon la revendication 6, dans lequel le premier système partiel génère la quatrième clé publique en raison d'une commande de blocage et transfère ensuite la quatrième clé publique à tous les deuxièmes systèmes partiels, où les deuxièmes systèmes partiels déterminent ensuite l'identificateur pour chaque couple possible et le transmettent aux systèmes informatiques de sorte que, dans chacun des systèmes informatiques, l'identificateur identifiant le couple contenant le système informatique concerné et le dispositif cryptographique est stocké dans la liste de blocage correspondante.

8.  Procédé selon l'une des revendications précédentes, dans lequel il s'agit d'un document de valeur ou de sécurité, notamment d'une carte à puce, dans le cas du dispositif cryptographique.

9.  Produit-programme informatique, notamment support de stockage numérique, doté d'instructions exécutables pour la réalisation d'un procédé selon l'une des revendications précédentes.

10. Système de blocage (120) permettant le blocage de l'utilisation d'un dispositif cryptographique (100) par rapport à une quantité de systèmes informatiques (1, 2, ..., i, ..., l), dans lequel le dispositif cryptographique (100) présente une première clé privée (102), où, chaque fois, une liste de blocage (138.i) et une deuxième clé privée (118.i) sont associées à chacun des systèmes informatiques (i), avec :

    - des moyens (130, 132) permettant la création d'une deuxième clé publique (116.i) pour chacune des deuxièmes clés privées (118.i) à partir de la deuxième clé privée (118.i) concernée et d'une troisième clé publique (128), où la troisième clé publique (128) est associée à une troisième clé privée (126) pour laquelle le système de blocage (120) a un accès, où un identificateur peut être déterminé par chacune des deuxièmes clés publiques (116.i) et la première clé privée (102) du dispositif cryptographique (100), identificateur qui identifie le couple constitué par le dispositif cryptographique (100) et le système informatique , lequel est associé à la deuxième clé publique (116.i) concernée,
    - des moyens (130, 132) permettant la réception d'une commande de blocage,
    - des moyens (130, 132) permettant la création de l'identificateur pour chacune des paires constituée d'une première clé publique (104) du dispositif cryptographique (100), de la deuxième clé privée (118.i) et de la troisième clé privée (126), où la première clé publique (104) correspond à la première clé privée (126) du dispositif cryptographique (100) et forme conjointement avec celle-ci une paire de clés cryptographiques asymétrique,
    - des moyens (130, 132) permettant le transfert des identificateurs aux systèmes informatiques concernés (i) pour le stockage dans leurs listes de blocage (138.i) respectives.

11. Système de blocage selon la revendication 10, où le système de blocage présente des premiers (134) et des deuxièmes systèmes partiels (136), où uniquement le premier système partiel a un accès à la troisième clé privée et uniquement le deuxième système partiel a un accès à la deuxième clé privée, où le deuxième système partiel est conçu pour la création de la deuxième clé publique à partir de la deuxième clé privée et de la troisième clé publique.

12. Système de blocage selon la revendication 11, dans lequel le premier système partiel contient les moyens (130', 132') permettant la réception de la commande de blocage, où la commande de blocage contient des données d'identification permettant l'identification du dispositif cryptographique, et où le premier système partiel est conçu pour l'accès à une banque de données (106) à l'aide des données d'identification afin de lire la première clé publique de l'identificateur à partir de la banque de données.

13. Système informatique (1, 2, .., i, ..., l) doté

    - de moyens (122.i, 124.i) permettant la réception d'une deuxième clé publique (116.i) provenant d'un système de blocage (120) selon l'une des revendications 10 à 12,
    - de moyens (122.i, 124.i) permettant le transfert de la deuxième clé publique (116.i) à un système informatique d'utilisateur (112), lequel peut être couplé avec le dispositif informatique (100),
    - de moyens (122.i, 124i) permettant la réception de l'identificateur pour le couple formé par le dispositif cryptographique (100) et le système informatique (i),
    - de moyens (122.i, 124.i) permettant la comparaison de l'identificateur avec une liste de blocage (138.i), où des identificateurs reçus par le système de blocage en raison de la commande de blocage sont stockés dans la liste de blocage (138.i).

Fig. 1

Sperrsystem 120

dritter öffentlicher Schlüssel 128

dritter geheimer Schlüssel 126

zweiter öffentlicher Schlüssel 116.1

zweiter geheimer Schlüssel 118.1

Prozessor 130

Programm 132

Datenbank 106

erster öffentlicher Schlüssel 104

Objekt 100

erster geheimer Schlüssel 102

Prozessor 108

Programm 110

Nutzer-Computersystem 112

Netzwerk 114

Server-Computersystem 1

zweiter öffentlicher Schlüssel 116.1

Prozessor 122.1

Programm 124.1

Server-Computersystem 2

zweiter öffentlicher Schlüssel 116.2

Prozessor 122.2

Programm 124.2

| Datenbank | ~106 |

| erster öffentlicher Schlüssel | ~104 |

| Objekt | ~100 |

| erster geheimer Schlüssel | ~102 |

| Prozessor | ~108 |
| Programm | ~110 |

| Nutzer-Computersystem | ~112 |

Netz-werk ~114

| Sperrsystem | **120** |

| Teilsystem | **134** |

| dritter öffentlicher Schlüssel **128** | dritter geheimer Schlüssel |

| Prozessor | |
| Programm | 126 |

**130'**    **132'**

| Teilsystem | **136** |

| zweiter öffentlicher Schlüssel **116.1** | zweiter geheimer Schlüssel |

| Prozessor | |
| Programm | 118.1 |

**130"**    **132"**

| Server-Computersystem | 1 |

| zweiter öffentlicher Schlüssel | 116.1 |

| Prozessor | 122.1 |
| Programm | 124.1 |

| Server-Computersystem | 2 |

| zweiter öffentlicher Schlüssel | 116.2 |

| Prozessor | 122.2 |
| Programm | 124.2 |

**Fig. 2**

**Vorbereitung**

| | | |
|---|---|---|
| SK | Secret Key | |
| PK | Public Key | |

**106**

**Datenbank**

**104** — $PK_{Objekt}$

**134**

**"top"**          **126**          **128**

$SK_{Sperrung}$     $PK_{Sperrung}$          Ⓑ

**100**

**Objekt**          $SK_{Objekt}$

**102**

**136.j**

• • •

**"middle(j)"**

$PK_{down(i)}$  =  $SK_{down(i)}$  *  $PK_{Sperrung}$          Ⓒ

**116.i**          **118.i**          **128**

Ⓐ

**i**

**"down(i)"**

**116.i** — $PK_{down(i)}$  Ⓓ

**Fig. 3**

EP 2 399 218 B1

18

# Nutzung

Datenbank

"top"

Objekt $\boxed{SK_{Objekt}}$

$I_{Objekt}^{down(i)} = SK_{Objekt} * PK_{down(i)}$

"middle(j)"

$PK_{down(i)}$

① ②

$I_{Objekt}^{down(i)}$

"down(i)"

$\boxed{PK_{down(i)}}$

**Fig. 4**

EP 2 399 218 B1

Fig. 5

**IN DER BESCHREIBUNG AUFGEFÜHRTE DOKUMENTE**

**In der Beschreibung aufgeführte Patentdokumente**

- US 20040123098 A1

- DE 10342710 A1

**In der Beschreibung aufgeführte Nicht-Patentliteratur**

- Advanced Security Mechanisms for Machine Readable Travel Documents - Extended Access Control (EAC), Password Authenticated Connection Establishment (PACE), and Restricted Identification (RI). *BUNDESAMT FÜR SICHERHEIT IN DER INFORMATIONSTECHNIK*